# EUROPÄISCHE PATENTSCHRIFT

(11) **EP 0 659 843 B1**
(45) Veröffentlichungstag und Bekanntmachung des Hinweises auf die Patenterteilung: **13.02.2002**
(21) Anmeldenummer: 94118169.5
(22) Anmeldetag: 18.11.1994
(51) Int. Cl.: C09C 1/00, C09C 3/06, C09C 1/40, C09C 1/24, C09C 1/02, C09C 1/28, C09C 1/30

(54) **Nicht glänzendes Pigment**
Non-brilliant pigment
Pigment non brillant

(30) Priorität: 25.11.1993 DE 4340146
(43) Veröffentlichungstag der Anmeldung: 28.06.1995
(73) Patentinhaber: MERCK PATENT GmbH, 64293 Darmstadt (DE)
(72) Erfinder: Schmidt, Christoph, Dr., D-65830 Kriftel (DE); Herbski, Margarete, D-64372 Ober-Ramstadt (DE); Seibel, Claudia, D-64853 Otzberg (DE); Emmert, Ralf, Dr., D-64807 Dieburg (DE); Ambrosius, Klaus, Dr., D-64807 Dieburg (DE)

(56) Entgegenhaltungen:
- EP-A- 0 220 617
- DATABASE WPI Week 8630 Derwent Publications Ltd., London, GB; AN 86-192304 XP002006139 & JP-A-61 123 673 (TOYOTA JIDOSHA) , 11.Juni 1986
- DATABASE WPI Week 7729 Derwent Publications Ltd., London, GB; AN 77-51718Y XP002006140 & SU-A-539 604 (GIPRONINEMETALLORUD) , 14.Februar 1977

## Beschreibung

Die Erfindung betrifft nicht glänzende Pigmente mit verbesserten Eigenschaften.

Klassische Absorptionspigmente, wie z.B. Titan- oder Eisenoxid, bestehen üblicherweise aus sehr kleinen Partikeln mit einer mittleren Größe von typischerweise 0,1-1 µm, die bestimmte Wellenlängen bzw. Wellenlängenbereiche des einfallenden Lichtes absorbieren und/oder stark streuen, und der Farbeffekt wird durch die verbleibenden Komponenten des einfallenden Lichtes hervorgerufen.

Derartige Pigmente weisen ein hohes Deckvermögen auf, wobei die optischen Eigenschaften durch die mittlere Teilchengröße beeinflußt werden können. Mit abnehmender mittlerer Teilchengröße wird im allgemeinen eine Vergrößerung von Farbreinheit und Farbstärke beobachtet.

Diesen Vorteilen hinsichtlich ihrer optischen Eigenschaften stehen einige gravierende anwendungstechnische Nachteile gegenüber. Sehr feinkörnige Pigmente weisen im allgemeinen eine unbefriedigende Dispergierbarkeit auf, die sich mit abnehmender Teilchengröße weiter verschlechtert. Dies kann zurückgeführt werden auf die starke Neigung sehr feinkörniger Partikel zur Bildung von Agglomeraten, die nur unter hohem Energie- und Zeitaufwand und unter Einsatz spezieller Dispergiergeräte beseitigt werden können.

Durch die Tendenz zur Agglomeratbildung wird in einer Pigment-Formulierung die Qualität des Farbtons verringert und gleichzeitig steigt die zur Erreichung einer bestimmten Farbsättigung in der Pigment-formulierung erforderliche Pigmentmenge an, wodurch wiederum die Viskosität der Formulierung unvorteilhaft beeinflußt wird.

Als Faustregel für die Anwendung klassischer nichtglänzender Pigmente gilt daher: je höher die optische Qualität dieser Pigmente, desto schwieriger und teurer die Verarbeitbarkeit (s. G.D. Parfitt, "Dispersion of powders in liquids", Elsevier Science Publishing Co., New York 1986).

Klassische Absorptionspigmente weisen darüberhinaus in Formulierungen eine hohe Ölabsorption auf und zeichnen sich durch ein schlechtes "skin-feeling" aus.

Im Unterschied zu klassischen nicht glänzenden Pigmenten basieren Perlglanzpigmente auf plättchenförmigen Substraten, insbesondere aus Glimmer, welche mit einer oder mehreren Schichten aus einem oder mehreren Metalloxiden bedeckt sind, wobei die plättchenförmigen Substrate mittlere Durchmesser von typischerweise 15-200 µm aufweisen. Diese Pigmente weisen wegen der glatten Oberflächen und des größeren mittleren Partikeldurchmessers in Formulierungen eine wesentlich bessere Prozessierbarkeit auf. Die optischen Eigenschaften sind durch einen hohen Glanz und durch ein geringes Deckvermögen gekennzeichnet, welches auf das transparente oder semitransparente Substratmaterial zurückgeführt werden kann.

Es sind in der Literatur bereits Vorschläge für Pigmente gemacht worden, die die Eigenschaften klassischer Pigmente (hohe Farbreinheit, kein Glanz) mit der guten Prozessierbarkeit von Pigmenten mit größeren Teilchengrößen vereinen. So wird z.B. in der EP 0 406 657 vorgeschlagen, auf Glimmersubstraten anstelle einheitlicher, kompakter Metalloxidüberzüge individuelle Pigmentpartikel im Submikron-Bereich abzuscheiden. Die dadurch erhaltenen Pigmente, welche auch als Transparent Colours bezeichnet werden, weisen durch die erhöhte Lichtstreuung an den Submikron-Pigmentpartikeln im Unterschied zu Perlglanzpigmenten keinen Glanz auf, sind jedoch wie diese durch ein geringes Deckvermögen gekennzeichnet.

Es bestand daher ein großer Bedarf an nichtglänzenden Pigmenten, die sich durch vorteilhafte optische Eigenschaften und insbesondere eine große Farbintensität und ein hohes Deckvermögen sowie durch eine gute Prozessierbarkeit und ein gutes "skin-feeling" auszeichnen.

Eine Aufgabe der vorliegenden Erfindung bestand in der Bereitstellung von neuen Pigmenten, die dieses Anforderungsprofil in hohem Maße erfüllen. Weitere Aufgaben der vorliegenden Erfindung kann der Fachmann der nachfolgenden detaillierten Beschreibung der Erfindung entnehmen.

Gegenstand der vorliegenden Erfindung sind nichtglänzende Pigmente mit hoher Farbintensität und hohem Deckvermögen, welche erhältlich sind durch trockenes Mahlen von plättchenförmigen anorganischen Substraten, nachfolgendes Klassieren und Aufbringen von einer oder mehreren Schichten, welche jeweils ein oder mehrere schwerlösliche, fest haftende anorganische oder organische Farbmittel enthalten. Gegenstand der Erfindung sind weiterhin Verfahren zur Herstellung dieser Pigmente sowie die Verwendung der Pigmente in Kunststoffen, Lack- und Druckformulierungen und kosmetischen Zubereitungen.

Glimmer ist ein Beispiel für natürlich vorkommendes anorganisches plättchenförmiges Material. Glimmer wird auch zur Herstellung von herkömmlichen Perlglanzpigmenten verwendet. Dabei wird der Glimmer durch Naßmahlung mit nachfolgendem Windsichten üblicherweise so aufgearbeitet, daß mehrere Fraktionen mit unterschiedlicher Teilchengrößenverteilung erhalten werden.

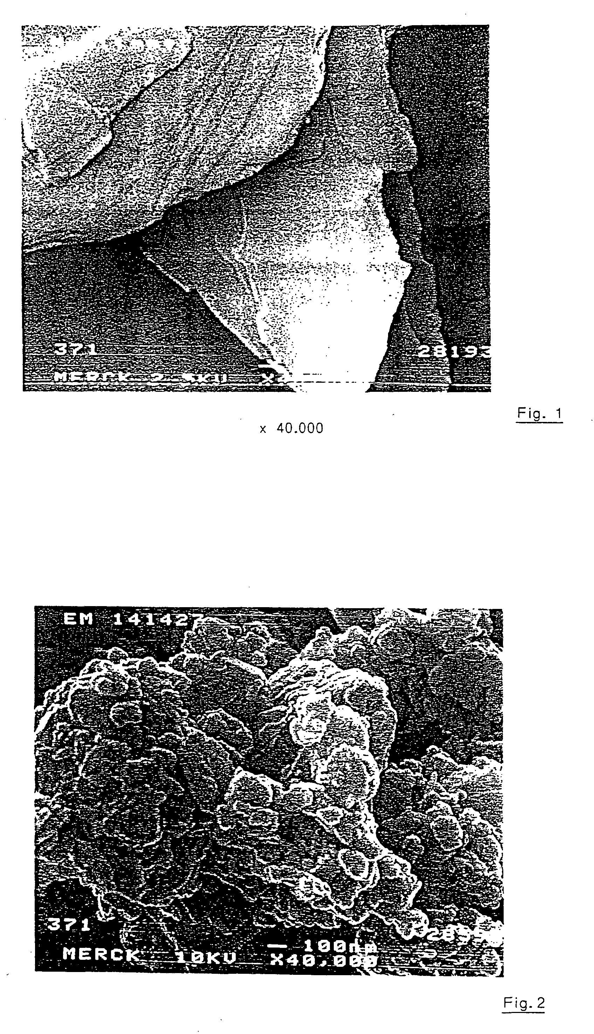

Bei der Naßmahlung wird z.B. ein feuchter Brei des anorganischen plättchenförmigen Substratmaterials zwischen relativ zueinander bewegten Flächen zerrieben. Die Substratpartikel werden dabei hauptsächlich durch Scherung zerkleinert, wodurch die ursprüngliche Plättchenform weitgehend erhalten bleibt. In Fig. 1 ist eine REM-Aufnahme von naßgemahlenem Glimmer mit einer Partikelgröße < 15 µm zu sehen.

Die Beibehaltung der Plättchenstruktur hat zur Folge, daß die durch Beschichtung von naß gemahlenem Glimmer mit Metalloxidschichten erhaltenen Perlglanzpigmente sogar bei Verwendung der Fraktion < 15 µm als Substrat durch einen ausgeprägten Glanz gekennzeichnet sind. So weist z.B. der im Vergleichsexperiment 1 mit Eisenoxid beschichtete Glimmer mit einer Partikelgröße < 15 µm einen relativ hohen Glanz auf.

Überraschenderweise wurde nun gefunden, daß trockengemahlene anorganische plättchenförmige Substratpartikel ihre ursprüngliche Plättchenform weitestgehend verloren haben und keinerlei Glanz zu beobachten ist. So erhält man etwa bei der trockenen Mahlung von Muskovit-Glimmer in einer Kugelmühle ein weißes Pulver, welches im wesentlichen aus unregelmäßig geformten Partikeln besteht und keinen Glanz aufweist.

In Fig. 2 ist eine REM-Aufnahme von trocken gemahlenem Muskovit-Glimmer gezeigt. Man erkennt im Vergleich zu der REM-Aufnahme von naßgemahlenen Glimmer der Partikelgröße < 15 µm Fig. 1, daß die Einzelpartikel des trockenen gemahlenen Glimmers (Partikelgröße zwischen 1 und 22 µm) keine glatten Oberflächen mehr aufweisen, die dem resultierenden Pigment Glanz verleihen würden, da Substratpartikel auf der Oberfläche haften.

Aus Fig. 2 ist weiter ersichtlich, daß zwar einerseits die Einzelpartikel des trocken gemahlenen Glimmers ihre plättchenförmige Struktur weitestgehend verloren haben, daß jedoch andererseits im trockengemahlenen Substratmaterial eine gewisse plättchenähnliche oder 2-dimensionale "Fernordnung" mehr oder weniger stark erhalten bleibt. So wurde gefunden, daß die Partikel, welche bei der Trockenmahlung von nicht plättchenförmigen, 3-dimensionalen, regelmäßig oder unregelmäßig geformten anorganischen Substraten erhalten werden, eine andere, 3-dimensional-chaotische Struktur aufweisen, die keinerlei 2-dimensionale "Fernordnung" erkennen läßt.

Die besonders bevorzugten Eigenschaften der erfindungsgemäßen Pigmente, welche sich durch hervorragende optische Eigenschaften, insbesondere durch eine hohe Farbintensität und ein hohes Deckvermögen, und gleichzeitig durch eine gute Prozessierbarkeit auszeichnen, sind auf die besonderen Eigenschaften des zu ihrer Herstellung verwendeten Substratmaterials zurückzuführen, welches durch Trockenmahlung von anorganischem, plättchenförmigem Material erhalten wird.

Bei einem bevorzugten Trockenmahlverfahren wird der Glimmer in eine Rührwerkskugelmühle eingebracht und mit Mahlkörpem, z.B. aus Korund kontinuierlich zerkleinert. Die Mahlbedingungen werden so gewählt, daß die beschriebene Struktur des trockengemahlenen Substratmaterials erhalten wird. Es hat sich gezeigt, daß die Wahl der Mahlbedingungen nicht sehr kritisch ist und vom Fachmann für eine gegebene Mahlordnung leicht und ohne erfinderisches Zutun optimiert werden kann. Es muß im wesentlichen lediglich darauf geachtet werden, daß bei einer gegebenen Mahlanordnung die Mahldauer und der Leistungseintrag nicht so groß gewählt werden, daß jegliche 2-dimensionale "Fernordnung" zerstört wird.

Derartig exzessives Mahlen soll im Rahmen der vorliegenden Erfindung nicht als Trockenmahlen verstanden werden. Trockenmahlen im Sinne der vorliegenden Erfindung soll so verstanden werden, daß die Mahlbedingungen beim Mahlen anorganischer plättchenförmiger Substrate bei der jeweils verwendeten Trockenmahlanordnung so gewählt werden, daß die Einzelpartikel des gemahlenen Substratmaterials praktisch keine Plättchenform mehr aufweisen, während das Material noch eine gewisse, mehr oder weniger stark ausgeprägte 2-dimensionale "Fernordnung" aufweist.

Das beschriebene Trockenmahlverfahren ist nur beispielhaft zu verstehen, es können auch weitere Trockenmahlverfahren benutzt werden.

Das trockengemahlene Substratmaterial wird anschließend klassiert. Die Klassierung erfolgt vorzugsweise durch Windsichten.

Die Klassierung der trockengemahlenen Substratpartikel erfolgt vorzugsweise auf einen Trennschnitt d₉₅ von weniger als 50 µm und vorzugsweise von weniger als 35 µm; d₉₅ gibt den Durchmesser an, den 95 % der Partikel in einer Fraktion unterschreiten. Besonders bevorzugt sind trockengemahlene anorganische Partikel mit d₉₅ < 20 µm. Ganz besonders bevorzugt sind Fraktionen trocken gemahlener anorganischer Partikel, bei denen 95 % der Teilchen eine Größe zwischen 0,1 und 30 µm und insbesondere zwischen 0,2 und 20 µm aufweisen.

Als anorganische plättchenförmige Substrate werden besonders bevorzugt Schichtsilikate und ganz besonders bevorzugt Glimmer verwendet. Bevorzugte Schichtsilikate sind Talk, Kaolin oder Sericit, während als Glimmer besonders bevorzugt Muskovit, Biotit, Phlogopit, Vermiculit sowie auch synthetische Glimmer eingesetzt werden. Daneben können auch andere anorganische plättchenförmige Materialien wie z.B. Glasplättchen, SiO₂-Flakes, synthetische Flakes, Keramikflakes, Wismutoxychlorid, plättchenförmiges Bariumsulfat, plättchenförmiges Aluminiumoxid oder MIO (micaceous iron oxide) und auch weitere Materialien eingesetzt werden. Es kann sich dabei sowohl um natürlich vorkommende Mineralien als auch um synthetische Materialien handeln.

Die geometrischen Abmessungen der eingesetzten plättchenförmigen Substrate sind nicht kritisch. So können z.B. relativ große natürliche Glimmerpartikel mit einem mittleren Durchmesser von z.B. bis zu 2 cm oder mehr eingesetzt werden, es können aber auch wesentlich kleinere plättchenförmige Partikel mit einem mittleren Durchmesser von 50 µm oder weniger verwendet werden. Der Fachmann kann die Trockenmahlbedingungen (z.B. Mahlkörpergröße und -menge, Leistungseintrag etc.) ohne jedes erfinderische Zutun im Hinblick auf die eingesetzten plättchenförmigen Materialien modifizieren und optimieren.

Die Aufzählung der anorganischen plättchenförmigen Materialien ist nur beispielhaft zu verstehen, es können auch weitere Materialien verwendet werden; diese können sowohl mehr oder weniger transparent oder auch opak sein.

Ganz besonders bevorzugt ist Glimmer.

Auch für andere plättchenförmige anorganische Substrate als Glimmer wurden nach der Trockenmahlung Materialien erhalten, deren Struktur im wesentlichen der oben beschriebenen Struktur von trockengemahlenem Glimmer entspricht, d.h. im wesentlichen nicht plättchenförmige Einzelpartikel und eine mehr oder weniger stark ausgeprägte 2-dimensionale "Fernordnung".

Es wurde nun gefunden, daß durch die Beschichtung von trockenen gemahlenen plättchenförmigen anorganischen Substraten mit ein oder mehreren Schichten, welche jeweils aus einem oder mehreren schwerlöslichen, fest haftenden anorganischen oder organischen Farbmitteln bestehen, Pigmente erhalten werden, die sich durch vorteilhafte Eigenschaften und insbesondere durch eine große Farbintensität, hohe Farbreinheit und ein hohes Deckvermögen sowie durch eine gute Prozessierbarkeit und ein gutes "skin-feeling" auszeichnen.

Zur Beschichtung können verschiedenste Farbmittel wie z.B. Metallchalkogenide bzw. -chalkogenidhydrate, Farblacke, Komplexsalzpigmente, Rußpartikel und/oder organische Farbmittel verwendet werden.

Zur Beschichtung werden auf die trocken gemahlenen Substrate besonders bevorzugt farbige oder farblose Metalloxide/-hydroxide oder Metalloxidhydrate, wie z.B. Titanoxid, Zinnoxid, Zinkoxid, Zirkoniumoxid, Eisenoxid, gelbes FeO(OH) in der Goethitmodifikation, Chromoxid, Cobaltoxid, Kupferdioxid, Nickeloxid, Manganoxid, Siliziumdioxid, oder andere Metalloxide allein oder in Mischung aufgebracht, wobei eine oder auch mehrere aufeinanderfolgende Schichten abgeschieden werden können. Die aufgezählten Metalloxide sind lediglich beispielhaft zu verstehen und sollen die Erfindung erläutern, ohne sie zu begrenzen; bildet ein Metall mehrere Oxide wie z.B. Eisenoxid (Fe₂O₃, Fe₃O₄, Mischoxide wie TiO₂·Fe₂O₃), so können diese im allgemeinen durch Wahl geeigneter Abscheidebedingungen selektiv aufgebracht werden. Bei einigen Metallen können durch Reduktion der Metalloxidschichten auch stabile, im allgemeinen nichtstöchiometrische Suboxidschichten erhalten werden, wie z.B. Titansuboxid oder Titanoxynitrid.

Die Metalloxidschichten werden vorzugsweise naßchemisch aufgebracht, wobei die zur Herstellung von Perlglanzpigmenten entwickelten naßchemischen Beschichtungsverfahren angewendet werden können; derartige Verfahren sind z.B. beschrieben in DE 14 67 468, DE 19 59 988, DE 20 09 566, DE 22 14 545, DE 22 15 191, DE 22 44 298, DE 23 13 331, DE 25 22 572, DE 31 37 808, DE 31 37 809, DE 31 51 343, DE 31 51 354, DE 31 51 355, DE 32 11 602, DE 32 35 017 oder auch in weiteren Patentdokumenten und sonstigen Publikationen.

Bei der Naßbeschichtung werden die trockengemahlenen Partikel vorzugsweise in Wasser suspendiert und mit einem oder mehreren hydrolysierbaren Metallsalzen bei einem für die Hydrolyse geeigneten pH-Wert versetzt, der so gewählt wird, daß die Metalloxide bzw. -oxidaquate direkt auf den Partikeln niedergeschlagen werden, ohne daß es zu Nebenfällungen kommt. Der pH-Wert wird üblicherweise durch gleichzeitiges Zudosieren einer Base konstant gehalten. Anschließend werden die Pigmente abgetrennt, gewaschen und getrocknet und gegebenenfalls geglüht, wobei die Glühtemperatur im Hinblick auf die jeweils vorliegende Beschichtung optimiert werden kann. Falls gewünscht, können bei Mehrschichtpigmenten die Pigmente nach Aufbringen der einzelnen Beschichtungen abgetrennt, getrocknet und ggf. geglüht werden, um dann zur Auffällung der weiteren Schichten wieder resuspendiert zu werden.

Weiterhin kann die Beschichtung der trocken gemahlenen Partikel mit Metalloxiden/oxidhydraten auch z.B. in einem Wirbelbettreaktor durch Gasphasenbeschichtung erfolgen, wobei z.B. die in EP 0,045,851 und EP 0,106,235 zur Herstellung von Perlglanzpigmenten vorgeschlagenen Verfahren entsprechend angewendet werden können.

Besonders bevorzugt sind mit Titandioxid und/oder Eisenoxid beschichtete Partikel, welche durch Trockenmahlung von natürlichem oder synthetischem Glimmer, besonders von natürlichem Glimmer und ganz besonders von Muskovit erhalten werden. Dabei weisen die Pigmente vorzugsweise 1 oder 2 und insbesondere 1 Beschichtung auf.

Weiterhin bevorzugt sind mit gelben FeO(OH) in der Goethitmodifikation beschichtete Partikel. Diese Gelbpigmente werden vorzugsweise durch naßchemische Fällung von Eisen(II)salzen, wie FeCl₂, FeSO₄ bei erhöhter Temperatur und unter Sauerstoffzufuhr bei geeigneten pH-Bedingungen hergestellt.

Der Massenanteil der Metalloxidbeschichtung beträgt bezogen auf das Substrat 5 bis 350 %, vorzugsweise 10 bis 300 %.

Die trockengemahlenen Substratmaterialien können vorzugsweise auch mit Farblacken und insbesondere mit Al-Farblacken beschichtet werden. Dazu wird auf die Substratpartikel typischerweise zunächst eine Aluminiumhydroxidschicht aufgefällt, die in einem zweiten Schritt mit einem Farbstoff verlackt wird. Ein bevorzugtes Verfahren zur Aufbringung eines Al-Farblacks ist z.B. in DE 24 29 762 beschrieben, wobei auch die dort angegebenen Farblacke bevorzugt sind. Ein abgewandeltes, ebenfalls bevorzugtes Verfahren ist in DE 29 28 287 beschrieben. Ein ganz besonders bevorzugter Al-Farblack ist Carmin.

Die trocken gemahlenen Substratmaterialien können weiterhin bevorzugt mit Komplexsalzpigmenten und besonders bevorzugt mit Cyanoferratkomplexen beschichtet werden; ganz besonders bevorzugt sind Beschichtungen, welche Berliner Blau und/oder Turnbulls Blau enthalten. Dazu wird die wäßrige Suspension des trockengemahlenen Substratmaterials üblicherweise mit der Lösung eines Cyanoferrats und eines Eisensalzes versetzt und danach gegebenenfalls oxidiert, wie dies für herkömmliche Perlglanzpigmente, z.B. in EP 0,141,173 oder DE 23 13 332, beschrieben ist.

Die trocken gemahlenen Substratmaterialien können weiterhin bevorzugt mit organischen Farbstoffen und insbesondere mit Phthälocyanin- oder Metallphthalocyanin- und/oder Indanthrenfarbstoffen beschichtet werden. Dazu wird üblicherweise eine Suspension des trockengemahlenen Substrates in einer Lösung des Farbstoffes hergestellt und diese dann mit einem Lösungsmittel zusammengebracht, in welchem der Farbstoff schwerlöslich oder unlöslich ist, wie dies für herkömmliche Perlglanzpigmente, wie z.B. in DE 40 09 567, beschrieben ist.

Es können auch weitere Farbstoffe und Pigmente zur Anwendung kommen, z.B. Benzochinon-, Nitro-, Nitroso-, Azo-, Triarylmethan-, Xanthen-, Chinolin-, Cyanin-, Methin-, Oxazin-, Anthrachinon- oder Indigo-Typen.

Die beschriebenen Beschichtungen sind nur beispielhaft zu verstehen und sollen die vorliegende Erfindung lediglich erläutern, ohne sie zu begrenzen. Die trocken gemahlenen Substratmaterialien können auch mit anderen Farbmitteln beschichtet werden.

Die erfindungsgemäßen Pigmente sind durch eine hohe Farbintensität, Farbreinheit und ein hohes Deckvermögen gekennzeichnet. Da sie im Unterschied zu klassischen Absorptionspigmenten ein verbessertes skin-feeling und vorteilhafte Werte für die Ölabsorption aufweisen, werden sie vorzugsweise in wäßrigen oder nichtwäßrigen kosmetischen Formulierungen und auch in kosmetischen Feststoffzubereitungen wie Pudern u.ä. eingesetzt.

Die erfindungsgemäßen Pigmente weisen darüberhinaus eine gute Dispergierbarkeit und Redispergierbarkeit aus und sie werden daher vorzugsweise in wäßrigen oder nichtwäßrigen Beschichtungssystemen aus den Bereichen Druck und Lack eingesetzt; besonders bevorzugt werden derartige Pigmentzubereitungen auch zum Bedrucken von Lebensmittelpackungen und Textilien verwendet. Weiter zeichnen sich die erfindungsgemäßen Pigmente durch ein überaus hohe Reproduzierbarkeit der Farbtone aus, was bei konventionellen Formulierungen häufig nicht der Fall ist.

Weiterhin eignen sich die erfindungsgemäßen Pigmente auch besonders zur Pigmentierung von Kunststoffen.

Die erfindungsgemäßen Pigmentzubereitungen können für vielfältige Anwendungen eingesetzt werden, und ihnen kommt eine erhebliche wirtschaftliche Bedeutung zu.

Die nachfolgenden Beispiele sollen die Erfindung erläutern, ohne sie zu begrenzen.

### Beispiel 1

a) Herstellung von trockengemahlenem Glimmer
250 kg von natürlich vorkommenden Glimmer (Plättchendurchmesser bis etwa 2 cm) werden in einer industriellen Rührwerkskugelmühle (etwa 4 t Mahlkörpern aus Korund; Durchmesser der Mahlkörper etwa 5 mm) bei einem Leistungseintrag von maximal etwa 200 kW trocken gemahlen.
Das Mahlgut wird anschließend auf einem Windsichter klassiert, wobei folgende Fraktionen erhalten werden:

| | d₉₅/µm | d₅₀/µm |
|---|---|---|
| Fraktion I | 24 | 8 |
| Fraktion II | 12 | 4,5 |

d₉₅ und d₅₀ sind dabei die Durchmesserwerte, unter denen 95 bzw. 50 % der gemahlenen Partikel liegen.
b) Beschichtung mit Fe₂O₃
100 g trockengemahlener Glimmer der Fraktion I werden in 2 I vollentsalztem Wasser suspendiert und unter Rühren auf 75 °C erhitzt. Der pH-Wert wird mit 32%iger HCI auf 4,0 eingestellt, und es wird dann eine wäßrige FeCl₃-Lösung (270,82 g FeCl₃ · 6 H₂O in 1500 ml vollentsalztem Wasser) mit einer Geschwindigkeit von 4 ml/min zudosiert, wobei der pH-Wert durch Zudosierung von 32%iger NaOH konstant gehalten wird.
Nach Zugabe wird die Suspension bei abgeschalteter Heizung noch 15 min nachgerührt. Dann wird abgesaugt und mit 30 I vollentsalztem Wasser chloridfrei gewaschen. Das Pigment wird anschließend 8 h bei 110 °C getrocknet und 1 h bei 850 °C geglüht. Man erhält ein rotes Pigment mit hohem Deckvermögen und hoher Farbintensität, welches 40% Fe₂O₃ enthält.

### Beispiel 2

a) Herstellung von trockengemahlenem Glimmer Die Herstellung erfolgt nach dem in Beispiel 1a) angegebenen Verfahren.
b) Beschichtung mit Berliner Blau
   100 g trockengemahlener Glimmer der Fraktion I werden in 2 I vollentsalztem Wasser suspendiert und unter Rühren auf 75 °C erhitzt. Der pH-Wert wird mit 32%iger HCI auf 4,0 eingestellt, und es werden dann mit einer Geschwindigkeit von 0,3 ml/min eine wäßrige K₄[Fe(CN)₆]-Lösung (36,45 g K₄[Fe(CN)₆]·3 H₂O in 375 ml vollentsalztem Wasser) und eine wäßrige FeCl₃/NH₄Cl-Lösung (31,06 g FeCl₃ · 6 H₂O, 11,6 g NH₄Cl in mit 10 ml 32%iger HCI angesäuertem vollentsalztem Wasser, Gesamtvolumen 375 ml) gleichzeitig, aber getrennt zugegeben. Nach je 15 min wird die Dosierrate über 0,7 ml/min und 1,3 ml/min auf 2,0 ml/min gesteigert und bei diesem Wert die Belegung bis zum Verbrauch beider Lösungen geführt. Der pH-Wert wird mit 10%iger (NH₄)₂CO₃-Lösung konstant gehalten.
   Nach Zugabe wird die Suspension bei abgeschalteter Heizung noch 15 min nachgerührt. Dann wird abgesaugt und mit 15 I vollentsalztem Wasser chloridfrei gewaschen. Das Pigment wird anschließend 8 h bei 110 °C getrocknet. Man erhält ein blaues Pigment mit hohem Deckvermögen und hoher Farbintensität, welches 20 % Berliner Blau enthält.

### Beispiel 3

a) Herstellung von trockengemahlenem Glimmer
   Die Herstellung erfolgt nach dem in Beispiel 1a) angegebenen Verfahren.
b) Beschichtung mit Turnbullsblau
   100 g trockengemahlener Glimmer der Fraktion I werden in 2 I vollentsalztem Wasser suspendiert und unter Rühren auf 75 °C erhitzt. Der pH-Wert wird mit 20%iger H₂SO₄ auf 4,0 eingestellt, und es werden dann mit einer Geschwindigkeit von 0,3 ml/min eine wäßrige K₄[Fe(CN)₆]-Lösung (109,88 g K₄[Fe(CN)₆]·3 H₂O in 1500 ml vollentsalztem Wasser) und eine wäßrige FeSO₄-Lösung (139,16 g FeSO₄, 46,4 g NH₄Cl in mit 80 ml 20%iger H₂SO₄ angesäuertem vollentsalztem Wasser, Gesamtvolumen 1500 ml) gleichzeitig, aber getrennt zugegeben. Nach je 15 min wird die Dosierrate über 0,7 ml/min und 1,3 ml/min auf 2,0 ml/min gesteigert und bei diesem Wert die Belegung bis zum Verbrauch beider Lösungen geführt. Der pH-Wert wird mit 10%iger (NH₄)₂CO₃-Lösung konstant gehalten.
   Nach Zugabe wird die Suspension bei abgeschalteter Heizung noch 15 min nachgerührt. Dann wird abgesaugt und mit 45 I vollentsalztem Wasser chloridfrei gewaschen. Das Pigment wird anschließend 8 h bei 110 °C getrocknet. Man erhält ein blaues Pigment mit hohem Deckvermögen und hoher Farbintensität, welches 50 % Turnbulls Blau enthält.

### Beispiel 4

a) Herstellung von trockengemahlenem Glimmer
   Die Herstellung erfolgt nach dem in Beispiel 1a angegebenen Verfahren.
b) Beschichtung mit Fe₃O₄
   100 g trockengemahlener Glimmer der Fraktion I werden in 2 I vollentsalztem Wasser suspendiert und unter Rühren auf 75 °C erhitzt. Der pH-Wert wird mit 32%iger NaOH auf 8,0 eingestellt, und die Suspension wird mit Stickstoff gespült (130 l/h). Es wird dann eine wäßrige FeSO₄-Lösung (720,4 g FeSO₄ · 7 H₂O und 119,4 g KNO₃ in mit 40 ml 20%iger H₂SO₄ angesäuertem vollentsalztem Wasser, Gesamtvolumen 2000 ml) 1 h lang mit einer Geschwindigkeit von 2 ml/min und der Rest dann mit 4 ml/min zugegeben. Der pH-Wert wird durch Zudosierung von 10%iger NaOH konstant gehalten.
   Nach Zugabe wird die Suspension bei abgeschalteter Heizung noch 30 min nachgerührt. Dann wird abgesaugt und mit 45 I vollentsalztem Wasser sulfatfrei gewaschen. Das Pigment wird anschließend 8 h bei 100 °C getrocknet. Man erhält ein schwarzes Pigment mit hohem Deckvermögen und hoher Farbintensität, welches 67 % Fe₃O₄ enthält.

### Beispiel 5

100 g trocken gemahlener Glimmer der Fraktion I (Beispiel 1a) werden in 2 l Wasser suspendiert und unter Rühren auf 75 °C erhitzt. Nach Erreichen der Temperatur wird mit 10%iger Salzsäure der pH-Wert auf 2,2 eingestellt. 594 ml TiCl₄-Lösung (400 g TiCl₄/l H₂O) werden zu der Glimmersuspension zudosiert, wobei der pH-Wert mit 32%ier Natronlauge konstant gehalten wird. Nach beendeter Belegung wird 0,5 h nachgerührt und anschließend mit 32%iger Natronlauge der pH-Wert auf 7,0 eingestellt. Es wird dann eine wäßrige ZnCl₂-Lösung (9,31 g ZnCl₂ in 11 ml HCI und 330 ml H₂O) innerhalb 0,5 h zu der Suspension zugegeben. Man rührt 0,5 h bei Raumtemperatur nach, wäscht mit Wasser chloridfrei und trocknet die Pigmente 8 h bei 110 °C. Zuletzt werden die Pigmente 1 h bei 700 °C geglüht und 100 µm gesiebt.

Man erhält ein Weißpigment mit hoher Farbreinheit.

### Beispiel 6

50 g trocken gemahlener Glimmer der Fraktion I (Beispiel 1a) werden in 1 I Wasser suspendiert und unter Rühren bei 750 °C bei einem pH-Wert von 2,2 innerhalb von 15 min einer 30%igen TiCl₄-Lösung versetzt. Während der Belegung wird der pH-Wert mit einer 32%igen Natronlauge konstant gehalten. Das Produkt wird mit 10 l Wasser chloridfrei gewaschen und in 500 ml Wasser suspendiert. Zu dieser Pigmentsuspension werden in einer Stickstoffatmosphäre bei 70 °C eine wäßrige FeSO₄-Lösung (50 g FeSO₄ · 7 H₂O in 500 ml Wasser, mit 20%iger H₂SO₄ auf pH = 1,5 eingestellt) zugetropft. Anschließend wird mit einer 10%igen Na₂CO₃-Lösung der pH auf 4 eingestellt und Sauerstoff mit einer Rate von 5 l/h eingeleitet. Während der Reaktion wird der pH-Wert mit 10%iger Na₂CO₃-Lösung auf pH = 4 konstant gehalten. Nach 6 h ist die Reaktion beendet. Man rührt 0,5 h nach, wäscht mit Wasser sulfatfrei, trocknet das Produkt bei 110 °C und siebt auf 100 µm.

Man erhält ein Gelbpigment mit hoher Farbreinheit und gutem skin-feeling.

### Vergleichsbeispiel 1

Entsprechend den Beispielen 1b), 2b) und 4b) wurde naßgemahlener M-Glimmer (95 % der Glimmer-Teilchen mit Durchmesser zwischen 1 und 15 µm) mit Fe₂O₃, Berliner Blau und Fe₃O₄ beschichtet.

Mit den so erhaltenen Pigmenten sowie mit den Pigmenten gemäß den Beispielen 1 b), 2b) und 4b) wurden Lackkarten hergestellt, deren coloristische Messung unter Glanzbedingung (Geometrie 20°/22,5°, DIN 5033, Hunter-LAB) folgende Helligkeitswerte lieferte:

| | L-Werte | | |
|---|---|---|---|
| | Beschichtung | | |
| Substrat | Fe₂O₃ | Berliner Blau | Fe₃O₄ |
| trocken gemahlener Glimmer | 33,90 | 25,92 | 27,63 |
| Glimmer der Teilchengröße < 15 µm | 72,86 | 31,20 | 32,40 |

## Patentansprüche

1. Nichtglänzendes Pigment mit hoher Farbintensität und hohem Deckvermögen, welches erhältlich ist durch trockenes Mahlen von plättchenförmigen anorganischen Substraten, nachfolgendes Klassieren und Aufbringen von einer oder mehreren Schichten, welche jeweils ein oder mehrere schwerlösliche, fest haftende anorganische oder organische Farbmittel enthalten.

2. Pigment nach Anspruch 1, **dadurch gekennzeichnet, daß** die Klassierung auf einen Trennschnitt d₉₅ von weniger als 50 µm erfolgt.

3. Pigment nach einem der Ansprüche 1 bis 2, **dadurch gekennzeichnet, daß** als plättchenförmige anorganische Substrate Glimmer oder andere Schichtsilikate verwendet werden.

4. Pigment nach einem der Ansprüche 1 bis 3, **dadurch gekennzeichnet, daß** es als Farbmittel Metallchalkogenide bzw. -chalkogenidhydrate, Farblacke, Komplexsalzpigmente, Rußpartikel und/oder organische Farbstoffe enthält.

5. Pigment nach einem der Ansprüche 1-4, **dadurch gekennzeichnet, daß** es als Farbmittel Metalloxide/oxidhydrate, Aluminiumfarblacke, Cyanoferratkomplexe, Phthalocyanin- oder Metallphthalocyaninfarbstoffe und/oder Indanthrenfarbstoffe enthält.

6. Pigment nach Anspruch 5, **dadurch gekennzeichnet, daß** es als Metalloxid Titandioxid oder Eisenoxide enthält.

7. Pigment nach Anspruch 5, **dadurch gekennzeichnet, daß** es als Farbmittel gelbes FeO(OH) in der Goethitmodifikation enthält.

8. Pigment nach Anspruch 5, **dadurch gekennzeichnet, daß** der Massenanteil der Metalloxid/Oxidhydrat-Beschichtung bezogen auf das Substrat 5 bis 350 Massenprozent beträgt.

9. Pigment nach einem der Ansprüche 1 bis 8, **dadurch gekennzeichnet, daß** es ein oder zwei Farbmittelschichten aufweist.

10. Verfahren zur Herstellung der Pigmente nach einem der Ansprüche 1 bis 9, **dadurch gekennzeichnet, daß** die Farbmittelschichten auf die trockengemahlenen und klassierten, dispergierten Substratpartikel naßchemisch aufgefällt oder in einem Wirbelbettreaktor durch CVD aufgebracht werden, anschließend wäscht, trocknet und gegebenenfalls glüht.

11. Verwendung der Pigmente nach Anspruch 1 bis in Druck- oder Lackformulierungen, Kosmetika und Kunststoffen.

## Claims

1. Non-lustrous pigment of high colour intensity and high hiding power, which pigment is obtainable by dry-milling of platelet-like inorganic substrates, followed by classifying and applying one or more layers each of which contains one or more sparingly soluble, strongly adhering inorganic or organic colorants.

2. Pigment according to Claim 1, **characterized in that** classification is carried out to give a d₉₅ cut of less than 50 µm.

3. Pigment according to any one of Claims 1 to 2, **characterized in that** mica or other sheet silicates are used as the platelet-like inorganic substrates.

4. Pigment according to any one of Claims 1 to 3, **characterized in that** metal chalcogenides or metal chalcogenide hydrates, colour lakes, complex salt pigments, carbon black particles and/or organic dyes are contained therein as the colorant.

5. Pigment according to any one of Claims 1-4, **characterized in that** it contains metal oxides/hydrated metal oxides, aluminium colour lakes, cyanoferrate complexes, phthalocyanine or metal phthalocyanine dyes and/or indanthrene dyes as the colorant.

6. Pigment according to Claim 5, **characterized in that** the metal oxide is titanium dioxide or an iron oxide.

7. Pigment according to Claim 5, **characterized in that** the colorant is yellow FeO(OH) in the goethite form.

8. Pigment according to Claim 5, **characterized in that** the mass proportion of metal oxide/hydrated metal oxide coating relative to the substrate is from 5 to 350 mass percent.

9. Pigment according to any one of Claims 1 to 8, **characterized in that** it exhibits one or two colorant layers.

10. Process for preparing the pigments according to any one of Claims 1 to 9, **characterized in that** the colorant layers are precipitated onto the dry-milled and classified, dispersed substrate particles by a wet chemical method or are applied by CVD in a fluidized-bed reactor, and are then washed, dried and, if desired, calcined.

11. Use of the pigments according to any of Claims 1 to 9 in printing or paint and coating formulations, cosmetics and plastics.

## Revendications

1. Pigment non brillant avec une intensité de couleur élevée et un pouvoir colorant important, pouvant être obtenu par broyage à sec de substrats inorganiques lamellaires, suivi d'un classage et du dépôt d'une ou plusieurs couches qui contiennent chacune un ou plusieurs colorants inorganiques ou organiques difficilement solubles et solidement adhérents.

2. Pigment selon la revendication 1, **caractérisé en ce que** le classage se fait à un seuil de séparation d₉₅ inférieur à 50 µm.

3. Pigment selon l'une des revendications 1 à 2, **caractérisé en ce que** l'on utilise comme substrats inorganiques lamellaires du mica ou d'autres phyllosilicates.

4. Pigment selon l'une des revendications 1 à 3, **caractérisé en ce qu'**il contient comme colorant des chalcogénures ou chalcogénures hydratés de métaux, des laques colorées, des pigments à base de sels complexes, des particules de noir de fumée et/ou des colorants organiques.

5. Pigment selon l'une des revendications 1 à 4, **caractérisé en ce qu'**il contient comme colorants des oxydes/oxydes hydratés de métaux, de la laque colorée d'aluminium, des colorants à base de phtalocyanine ou de métallophtalocyanine et/ou des colorants à base d'indanthrène.

6. Pigment selon la revendication 5, **caractérisé en ce qu'**il contient comme oxyde métallique du dioxyde de titane ou des oxydes de fer.

7. Pigment selon la revendication 5, **caractérisé en ce qu'**il contient comme colorant du FeO(OH) jaune dans la modification goethite.

8. Pigment selon la revendication 5, **caractérisé en ce que** la proportion massique du revêtement en oxyde/oxyde hydraté de métal est de 5 à 350% en masse ramenée à la masse du substrat.

9. Pigment selon l'une des revendications 1 à 8, **caractérisé en ce qu'**il présente une ou deux couches de colorant.

10. Procédé de fabrication des pigments selon l'une des revendications 1 à 9, **caractérisé en ce que** les couches de colorant sont précipitées par voie chimique humide ou déposées par CVD dans un réacteur à lit fluidisé sur les particules de substrat broyées à sec, classées et dispersées et ensuite lavées, séchées et le cas échéant calcinées.

11. Utilisation des pigments selon la revendication 1 dans des formulations d'imprimerie ou de peinture, des cosmétiques et des matières plastiques.
